# DEMANDE DE BREVET EUROPEEN

(11) **EP 0 739 805 A1**
(43) Date de publication de la demande: **30.10.1996**
(21) Numéro de dépôt: 96400354.5
(22) Date de dépôt: 21.02.1996
(51) Int. Cl.: B62B 3/14, B62B 3/18

(54) **Chariot de libre-service**

(30) Priorité: 27.04.1995 FR 9505055
(71) Demandeur: SOCIETE ANONYME DES MARCHES USINES- AUCHAN S.A.M.U.-AUCHAN, F-59650 Villeneuve d'Ascq (FR)
(72) Inventeur: Langlois d'Estaintot, Pierre, F-92100 Meudon (FR); Detallante, Jean-Charles, F-75012 Paris (FR)
(74) Mandataire: Wagret, Frédéric Cabinet Wagret Consultants

(57) **Abrégé**

Chariot de libre-service (1) du type comprenant une structure porteuse réalisée à partir d'éléments filiformes pliées et soudées, comportant:
- deux montants latéraux (2, 3);
- un support inférieur (7) associé à des moyens de roulement (12, 15);
- un support supérieur (6) articulé selon un axe transversal horizontal;
- une poignée de préhension (17) à l'arrière;

caractérisé en ce que le support supérieur (6) comprend un plateau définissant une surface plane et deux éléments latéraux longiformes (30, 31) fixés par une extrémité à la partie avant frontale dudit plateau, et relié par une autre extrémité (arrière) à la structure porteuse (2, 3).

## Description

La présente invention concerne un chariot pour le portage de marchandises, susceptible d'être utilisé lors des déplacements d'un consommateur dans un lieu de vente du type libre-service.

On connaît des chariots de ce type réalisés à l'aide de profilés tubulaires filiformes, pliés et assemblés par soudure.

Ces chariots doivent répondre à des contraintes et spécifications variées.

En effet, ils doivent non seulement être à la fois:
- résistants aux chocs et aux intempéries;
- de fabrication bon marché;
- de grande contenance; mais également:
- s'adapter aux différentes formes et volumes des marchandises exposées dans le chariot par le consommateur;
- permettre un accès aisé aux marchandises contenues, que ce soit lors du chargement ou du déchargement;
- répondre aux normes de sécurité; et enfin être:
- d'utilisation conviviale et commode;
- susceptible de permettre une pénétration d'un chariot dans l'autre pour réduire leur volume de stockage; et
- d'esthétique agréable.

Or, les chariots connus ne réussissent pas à concilier toutes ces contraintes; ils favorisent certaines, telles que par exemple la solidité et la contenance, au détriment d'autres telles que l'esthétique et la facilité et confort d'utilisation.

La présente invention vise à remédier aux inconvénients de l'art antérieur et propose un chariot de libre-service répondant à l'ensemble des exigences précédemment évoquées.

A cette fin, selon l'invention, le chariot de libre-service, du type comprenant une structure porteuse réalisée à partir d'éléments filiformes pliés, et comportant:
- au moins deux montants latéraux;
- un support plan inférieur associé à des moyens de roulement;
- un support plan supérieur articulé selon un axe transversal horizontal; et
- une poignée de préhension,
est caractérisé en ce que le support supérieur comprend un plateau définissant une surface plane et deux éléments latéraux longiformes, fixés par une extrémité à la partie avant dudit plateau, et reliés par une autre extrémité à la structure porteuse et plus particulièrement aux deux montants latéraux.

Avantageusement, chaque élément latéral du plateau supérieur constitue une rambarde ou équivalent délimitant latéralement un volume utile pour ledit plateau.

Plus précisément, chaque élément latéral est constitué d'une tige fixée sur le plateau supérieur par une extrémité, et dont l'autre extrémité libre est susceptible de coulisser dans un guide prévu sur un montant latéral correspondant.

Préférentiellement, l'extrémité libre des éléments latéraux formant rambarde, comporte une butée apte à coopérer avec ledit guide afin de limiter le débattement du plateau supérieur en rotation.

Selon une forme avantageuse, chaque montant latéral est coudé et présente une concavité tournée vers l'arrière, le plateau supérieur étant articulé sur les montants au niveau audit coude.

Afin d'améliorer la convivialité du chariot, celui-ci comprend deux sièges pour enfants, comportant une assise unique sous la forme d'une plaque horizontale fixée à la structure, et deux dossiers indépendants formés chacun d'un panneau.

De préférence, les panneaux/dossiers sont articulés selon un axe horizontal transversal et sont déplaçables en rotation entre une position active orthogonale à l'assise, et une position horizontale apte à servir de support plan.

Chaque dossier comporte une échancrure courbe, délimitant une languette en forme de U en matériau souple élastique, ladite languette étant ainsi apte à être écartée du plan formé par le dossier, de manière temporaire, pour y glisser un document par exemple, maintenu par pincement.

Afin de permettre l'accrochage de vêtements ou similaires, au moins l'un des montants latéraux de la structure porteuse est prolongé par un élément disposé dans un plan vertical longitudinal. Chaque élément comporte deux butées en forme de téton disposées sur une partie supérieure horizontale dudit élément, pour l'accrochage de cintres ou similaires.

En vue de permettre l'accrochage de paniers, sacs, cabas, cartables ou analogues, le chariot comporte une languette saillante vers l'arrière, sensiblement horizontale, et apte à coopérer avec un anneau, anse ou crochet, ou similaire de l'objet suspendu.

Afin de permettre le transport d'objets filiformes de dimension longitudinale supérieure ou très supérieure à sa dimension transversale, le chariot comporte une plaquette, sensiblement au niveau du support/plateau inférieur, sur laquelle est susceptible de prendre appui l'objet filiforme transporté.

En vue de permettre une mobilité et un confort d'utilisation accrus pour l'utilisateur, le plateau supérieur comporte une poignée à l'avant définie de préférence par une ouverture dans la partie avant dudit plateau.

L'invention sera bien comprise à la lumière de la description qui suit se rapportant à un exemple illustratif mais non limitatif de l'invention, en référence aux dessins annexés dans lesquels:
- la figure 1 est une vue en perspective avant d'une forme de réalisation du chariot de l'invention;
- la figure 2 est une vue en perspective arrière du chariot de la figure 1;
- les figures 3A et 3B sont des schémas montrant de côté le chariot pour deux positions extrêmes du plateau supérieur;
- la figure 4 est une vue schématique en perspective du chariot comportant un chargement sur les plateaux supérieur et inférieur;
- la figure 5 est une vue en perspective schématique de détails de la languette d'accrochage de sacs; et
- la figure 6 est une vue en perspective à l'échelle agrandie montrant la partie supérieure du chariot.

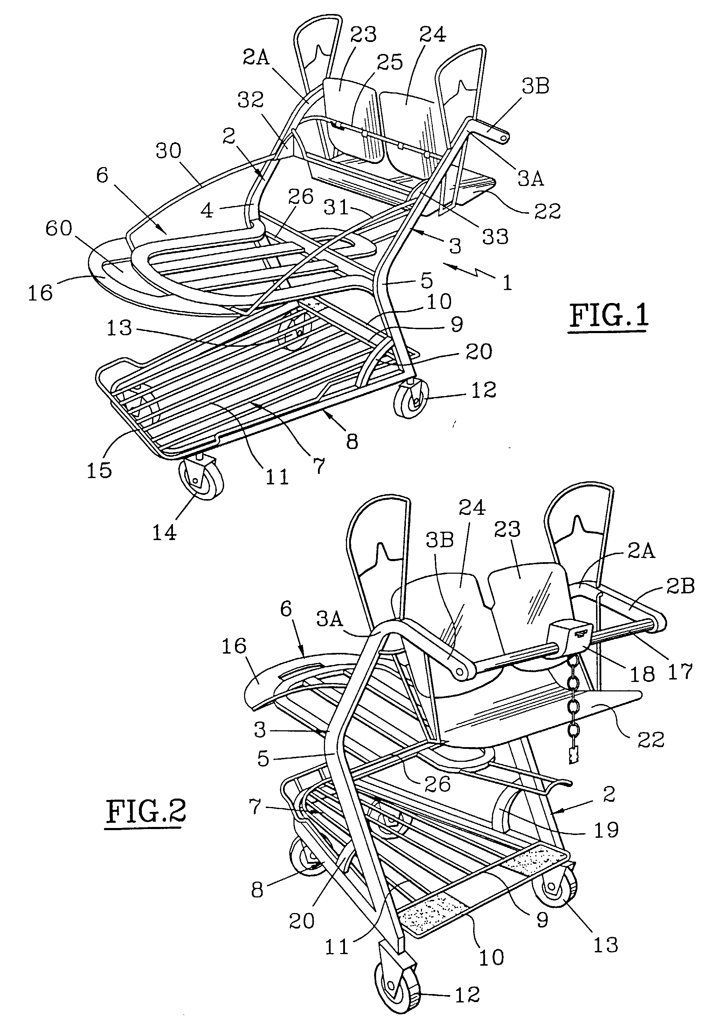

En référence à la figure 1, le chariot de l'invention comporte une structure porteuse 1 comprenant deux montants latéraux 2 et 3 réalisés à partir de profilés longiformes métalliques. Les montants latéraux 2 et 3 sont de direction sensiblement verticale et comportent chacun un coude respectivement 4 et 5 disposé sensiblement en leur milieu. Le coude est formé de manière que la concavité des montants latéraux 2 et 3 est tournée vers l'arrière (vers l'utilisateur).

Le chariot 1 comporte également un plateau supérieur 6 et un plateau inférieur 7. Le plateau inférieur 7 comporte un arceau 8 en forme générale de U réalisé à partir d'un profilé métallique plié, et dont l'ouverture est orientée vers l'arrière. Au niveau de l'ouverture du U sont prévues deux barres parallèles 9 et 10 de direction transversale. Des barres longitudinales, telle que la barre 11 est soudée sur la barre arrière transversale 9 et sur la partie avant frontale de l'arceau 8 en U du plateau inférieur 7. Des moyens de roulement sont prévus et fixés sur l'arceau 8 en U du plateau inférieur 7. Ces moyens de roulement connus en eux-mêmes et non explicités plus en détail, comportent des roues arrière 12 et 13 montées libres à rotation sur un axe transversal horizontal, tandis que les deux roues avant 14 et 15 sont montées à rotation selon un axe horizontal de direction variable, par l'intermédiaire d'une fourche montée pivotante sur un axe vertical. La base des montants latéraux 2 et 3 est fixée par soudage à l'extrémité des branches du U formées par l'arceau 8 du plateau inférieur 7.

Le plateau supérieur 6 est constitué d'un panneau plan de forme générale sensiblement parallélépipédique, et dont le côté frontal 16 est de forme arrondie de concavité tournée vers l'arrière. Plus précisément, le plateau supérieur 6 est monté articulé selon un axe de rotation horizontal transversal, et de préférence au niveau des coudes 4 et 5 des montants latéraux 2 et 3.

L'extrémité supérieure 2A et 3A des montants latéraux 2 et 3 respectivement, est recourbée vers l'arrière et vers le bas selon un segment incliné 2B/3B dont seul le segment 3B est visible sur la figure 1.

Comme montré sur la figure 2, les extrémités distales du segment 2B et 3B vers l'arrière sont reliées transversalement par une barre horizontale 17 formant poignée, et à laquelle est fixé un organe, connu en soi, et non décrit en détail plus avant, permettant la solidarisation temporaire d'un chariot à l'autre et portant la référence 18.

En référence à nouveau à la figure 1, des éléments de contreventement latéraux 19 et 20 sont prévus pour relier d'une part la base de chaque montant latéral 2 et 3, et la partie arrière de l'arceau 8 du plateau inférieur 7. Les contreventements 19 et 20 sont en forme d'arc de cercle de préférence et sont soudés.

La partie supérieure du chariot comporte un double siège pour enfants comprenant une plaque inférieure 22 en matériau plastique, et deux panneaux 23 et 24 formant dossiers et montés articulés à rotation selon un axe matérialisé par une tige transversale 25, fixée (par soudure de préférence) sur la partie supérieure des montants 2 et 3, légèrement en dessous des extrémités respectives 2A et 3 A,

Le plateau supérieur 6 est monté articulé sur la structure 2, au niveau des coudes 4 et 5 des montants 2 et 3 respectifs, selon un axe transversal horizontal, matérialisé par une tige portant la référence 26 (figures 1 et 2).

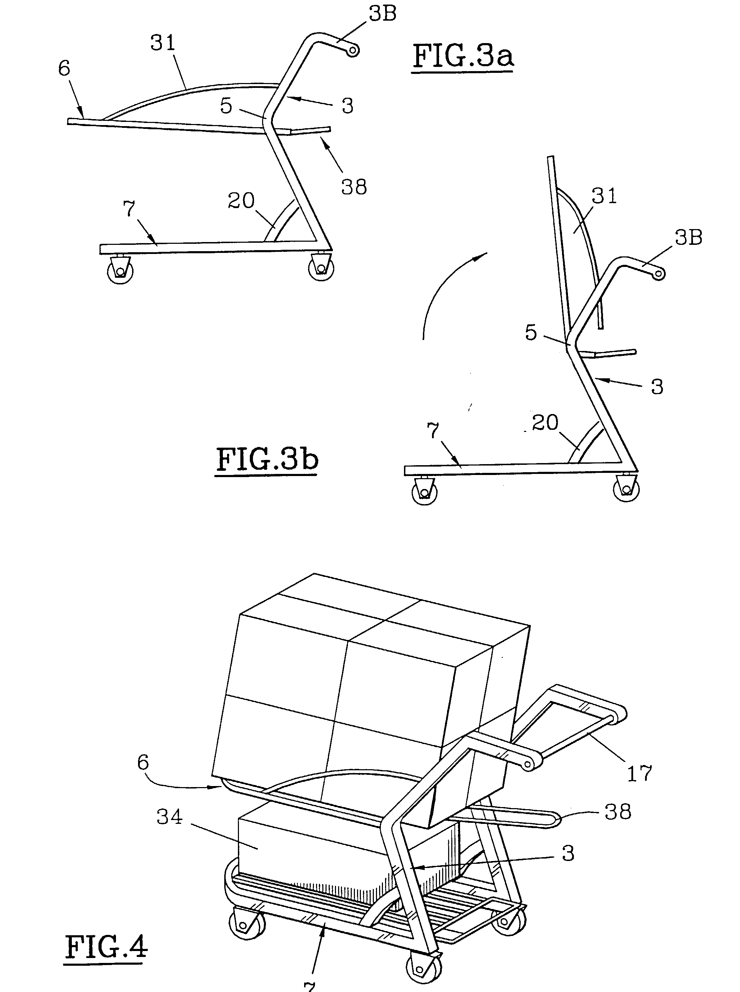

Les figures 3A et 3B montrent de façon schématique les deux positions extrêmes du plateau supérieur 6, à savoir en position abaissée active d'utilisation (figure 3A) et en position relevée (figure 3B) verticale ou subverticale.

Afin de retenir et maintenir le plateau supérieur 6 en position horizontalement, notamment en vue de permettre à ce dernier de supporter le chargement prévu, deux tiges latérales 30 et 31 (seule la tige gauche 31 est visible sur les figures 3A et 3B), sont prévues, formées à partir d'éléments tubulaires métalliques, et fixées par leur extrémité avant au plateau 6, par soudure tandis que leur autre extrémité (vers l'arrière) est susceptible de coulisser dans un guide respectivement 32 et 33. Les extrémités arrière des tiges de retenue 30 et 31 sont munies de butées ou crochets permettant de limiter le débattement vers l'avant des tiges, et donc du plateau supérieur, afin de maintenir ce dernier en position sensiblement horizontale (figure 3B). On constate que l'utilisateur est donc à même de faire basculer en saisissant la poignée avant 16 le plateau supérieur 6 vers la position verticale,ce qui provoque le coulissement des tiges de retenue 30 et 31 dans les guides 32 et 33. Ce basculement vers la position verticale permet à l'utilisateur d'avoir accès au plateau inférieur 7, pour le chargement ou le déchargement de ce dernier. Le chariot est muni de moyens de rappel (non représentés) du plateau supérieur 6 vers sa position verticale, sous la forme d'une barre de torsion ou analogue, de manière à au moins éviter au plateau de retomber brutalement vers sa position horizontale.

La figure 4 montre un chariot chargé sur son plateau inférieur 7 d'un paquet 34, tandis que le plateau supérieur 6 est chargé d'un ensemble de quatre boîtes, barquettes, ou conteneurs parallélépipédiques, de même forme et même dimension, et gerbés deux à deux, et disposés l'un contre l'autre quatre à quatre par plan. Ainsi quatre conteneurs sont disposés selon une première couche, sur laquelle est placée une seconde couche de quatre conteneurs. A noter que, pour des raisons de commodité et de clarté, le chariot de la figure 4 ne comporte pas tous les éléments et notamment à l'arrière (siège).

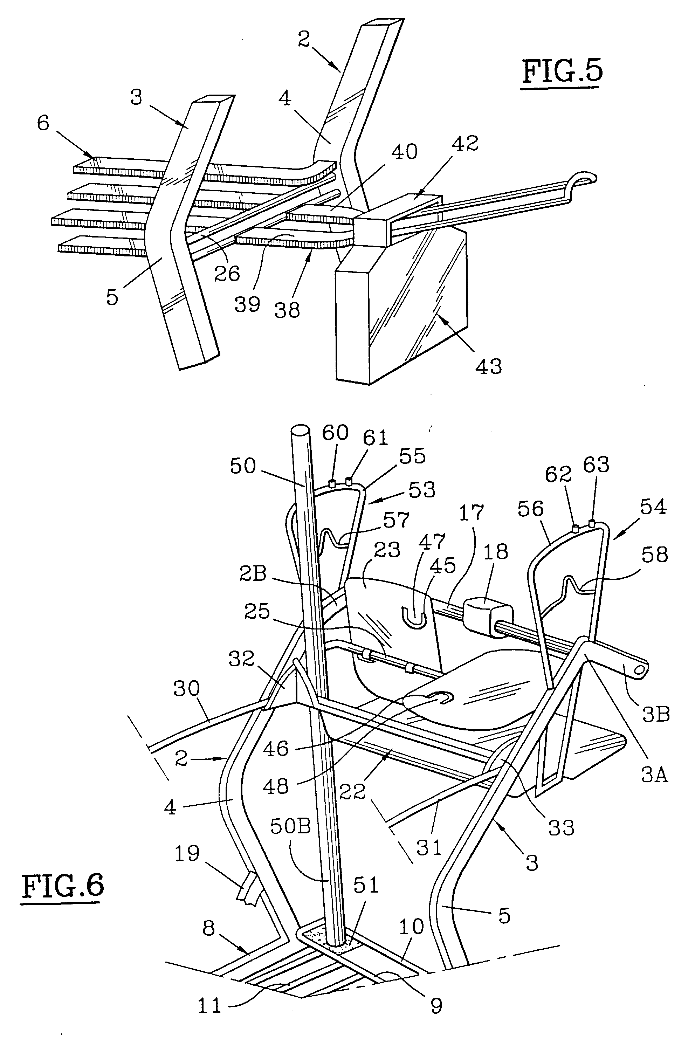

La figure 5 montre une une vue de détail à échelle agrandie d'une partie du chariot, et plus précisément un élément longiforme 38 faisant saillie, et situé sensiblement dans le plan du plateau supérieur 6. L'élément saillant 38 est formé d'une tige 13 recourbée en forme de U allongé, comportant deux branches 39 et 40 et dont l'extrémité 41 (le fond du U) est recourbée.

L'écartement des tiges 39 et 40 formant l'élément saillant 38 est tel qu'il permet l'accrochage d'un ou plusieurs sacs, cabas, paniers, cartables ou analogues, par la poignée 42 de ces derniers (43).

Sur la figure 6, on a montré en détail une vue en perspective de la partie supérieure du chariot (le plateau supérieur 6 a été omis pour des raisons de clarté). On retrouve sur cette figure les mêmes éléments portant les mêmes références.

On voit que les panneaux 23 et 24 formant dossier sont articulés sur une tige transversale 25. De préférence les dossiers 23 et 24 sont fixés sur la tige 25 par encliquetage.

Les panneaux 23 et 24 comportent, de préférence chacun, une échancrure respectivement 45 et 46, en forme de U et disposée de préférence à proximité d'un des coins supérieurs des panneaux. Les échancrures 45 et 46 sont en forme générale de U et délimitent ainsi une languette respectivement 47 et 48, réalisée en un matériau souple ou semi-rigide, susceptible d'être légèrement écartée par l'utilisateur par rapport au plan formé par les panneaux 23 et 24, selon un axe sensiblement horizontal et formé par la partie supérieure U délimitée par l'échancrure 45 et 46. Les languettes 47 et 48 permettent ainsi de disposer des documents, feuilles de papier, tels que listes ou autres documents que l'utilisateur souhaite avoir sous les yeux ou sous la main rapidement. La déformation élastique de la languette ramène celle-ci vers sa position de repos, c'est-à-dire vers le panneau 23 (24) et pince donc le document. Un élément destiné à disposer un crayon est prévu sur l'un au moins des dossiers (élément non représenté).

La figure 6 montre plus en détail les guides 32 et 33 permettant le coulissement des tiges de retenue latérale 30 et 31 du plateau supérieur 6. Ces guides sont soudés sur la partie inclinée supérieure des montants 2 et 3 respectivement.

Le chariot de l'invention permet également le portage, de manière fiable et commode, d'objets 50 très allongés tels qu'un tasseau de construction, balai ou analogue, et représenté de manière symbolique sur la figure 6. L'extrémité inférieure de l'objet filiforme 50 est apte à reposer par son extrémité inférieure 50B sur une plaquette 51 horizontale et disposée entre les tubulures 9 et 10 disposées à l'arrière du panneau inférieur 7. La partie médiane ou supérieure de l'objet 50 est disposée de manière à pénétrer dans l'ouverture délimitée par le montant 2, la tige 26 support de l'arrière de l'assise 22 du siège, un des côtés latéraux de ce dernier, et la tige transversale 25 de l'articulation des dossiers 23 et 24 du siège.

Enfin, il est prévu (figure 6) à l'extrémité supérieure 3A et 2A des montants, des éléments plans, réalisés de préférence à l'aide de profilés tubulaires, et de préférence sur chacun des montants. Ces éléments 53 et 54 comportent une partie respectivement 55 et 56 en forme de U, tournée vers le bas, et une partie en forme générale d'oméga, de direction sensiblement horizontale et longitudinale, et portant les références respectives 57 et 58. La partie supérieure arrondie de l'oméga ainsi formé par les pièces 57 et 58 constitue des portemanteaux ou éléments d'accrochage. La partie supérieure (le fond du U) des éléments 55 et 56 comporte deux jeux de tétons respectivement 60, 61 et 62, 63, faisant saillie par rapport au fond du U du côté opposé au chariot, et disposés à une distance respective de quelques centimètres. Ces tétons 60 à 63, disposés par deux, permettent l'accrochage de cintres sur la partie supérieure sensiblement horizontale des éléments 55 et 56 en forme de U, et délimitent le débattement des cintres.

En référence à nouveau aux figures 1 et 2, on a pourvu le chariot de moyens permettant d'augmenter sa commodité d'utilisation notamment en ce qui concerne les moyens de déplacement.

Il est prévu à l'avant du plateau supérieur 6, une ouverture 60 délimitée dans la partie avant, par l'arceau frontal 16, et dont l'épaisseur est telle qu'il puisse être pris dans la main de l'utilisateur pour que ce dernier le saisisse comme une poignée afin de tirer le chariot, et/ou soulever le plateau supérieur 6.

Enfin, à noter que le plateau supérieur 6 est, en position active de réception et de support des marchandises (figure 4 et figure 3A), en position légèrement inclinée vers l'arrière, sa'partie arrière étant légèrement plus basse que sa partie avant. Ceci permet de donner aux objets,et notamment les conteneurs disposés sur le plateau supérieur 6, un maintien adéquat en créant une force de rappel vers l'arrière desdits conteneurs. A noter que ces derniers, comme montré sur la figure 4, viennent en butée sur la tige transversale 26 formant l'arrière du siège et notamment de l'assise 22.

On comprend de ce qui précède que le chariot de l'invention comporte de nombreux avantages par rapport à l'art antérieur, et notamment en termes de convivialité, commodité d'utilisation et également en termes d'esthétique. Le chariot de l'invention conserve néanmoins des aptitudes certaines de fabrication aisée et bon marché et de résistance aux chocs et aux intempéries. Il apporte un confort d'utilisation accru aux utilisateurs qui disposent de moyens permettant d'utiliser le chariot à des fins autres que celles strictement limitées au portage des paquets et objets choisis sur les rayons.

L'invention n'est pas limitée aux modes de réalisation décrits et représentés, mais englobe toutes variantes incluses dans l'esprit de celle-ci.

## Revendications

1. Chariot de libre-service (1) du type comprenant une structure porteuse réalisée à partir d'éléments filiformes pliées et soudées, comportant:
- deux montants latéraux (2, 3);
- un support inférieur (7) associé à des moyens (12, 13, 14, 15) de roulement;
- un support supérieur (6) articulé selon un axe transversal horizontal; et
- une poignée de préhension (17) à l'arrière;
caractérisé en ce que le support supérieur (6) comprend un plateau définissant une surface plane et deux éléments latéraux longiformes 30, 31) fixés par une extrémité à la partie avant frontale dudit plateau, et relié par une autre extrémité (arrière) à la structure porteuse (2, 3).

2. Chariot selon la revendication 1, caractérisé en ce que chaque élément latéral (30, 31) du plateau supérieur (6) constitue un moyen de retenue et/ou de butée pour les objets disposés sur le chariot (1).

3. Chariot selon l'une des revendications 1 ou 2, caractérisé en ce que le plateau (6) est en position active, légèrement incliné vers l'arrière.

4. Chariot selon l'une des revendications précédentes, caractérisé en ce que les éléments latéraux longiformes de retenue (30, 31) du plateau supérieur (6) sont aptes à coulisser dans un guide (32, 33) fixé sur la structure, lors de la rotation du plateau supérieur.

5. Chariot selon l'une des revendications 1 à 4, caractérisé en ce que l'extrémité arrière des deux éléments latéraux longitudinaux de retenue (30, 31) sont pourvus d'une butée limitant le débattement de l'élément par rapport au guide (32, 33), et donc du plateau du support supérieur (6).

6. Chariot selon l'une des revendications précédentes, caractérisé en ce que chaque montant latéral (2, 3) de la structure porteuse est coudé, et présente une concavité tournée vers l'arrière, et en ce que le support supérieur (6) est articulé sensiblement au niveau du coude (4, 5).

7. Chariot selon l'une des revendications précédentes, caractérisé en ce qu'il comprend deux sièges pour enfants, comprenant une assise unique sous la forme d'une plaque horizontale (22) et deux dossiers indépendants (23, 24).

8. Chariot selon la revendication précédente, caractérisé en ce que les dossiers (23, 24) sont articulés selon un axe horizontal transversal (25), et rabattables entre une position active perpendiculaire à l'assise (22) et une position horizontale où ils peuvent servir de support plan.

9. Chariot selon la revendication précédente, caractérisé en ce que au moins un des dossiers (23, 24) comporte une échancrure courbe (45, 46), délimitant une languette (47, 48) en forme générale de U, et susceptible d'être écartée momentanément et de manière élastique du plan formé par le dossier (23, 24), de manière à pouvoir maintenir par pincement des objets plans tels que feuilles de papier.

10. Chariot selon l'une des revendications précédentes, caractérisé en ce que au moins un des montants latéraux (2, 3) de la structure porteuse est prolongée par un élément plan vertical (53, 54), conformé de manière à constituer un portemanteaux et/ou un support pour cintres.

11. Chariot selon l'une des revendications précédentes, caractérisé en ce qu'il comporte une tige (38) saillante vers l'arrière, apte à supporter par accrochage des paniers, sacs, cartables ou analogues.

12. Chariot selon la revendication précédente, caractérisé en ce que ladite tige (38) saillante d'accrochage est disposée sensiblement dans le prolongement du plan du support plateau supérieur.

13. Chariot selon l'une des revendications précédentes, caractérisé en ce qu'il comporte une plaquette pleine (51) prévue à l'arrière du plateau inférieur (7), pour le support d'objets (50) filiformes très allongés.

14. Chariot selon l'une des revendications précédentes, caractérisé en ce que le plateau supérieur (6) comporte une poignée (16) définie par une ouverture (60) dans la partie avant dudit plateau (6).
